# EUROPEAN PATENT SPECIFICATION

(11) **EP 3 268 258 B1**
(45) Date of publication and mention of the grant of the patent: **03.04.2019**
(21) Application number: 16717466.3
(22) Date of filing: 08.03.2016
(51) Int. Cl.: B62B 3/00, B62D 7/14, B62D 13/04

(54) **TRANSPORT TROLLEY WITH STEERING WHEELS**
TRANSPORTWAGEN MIT LENKRÄDERN
CHARIOT DE TRANSPORT AVEC VOLANTS

(30) Priority: 10.03.2015 IT PD20150056
(43) Date of publication of application: 17.01.2018
(73) Proprietor: Tellure Rôta S.p.A., 41043 Formigine (MO) (IT)
(72) Inventor: DE CURTIS, Leonardo Simone, I-41043 Formigine MODENA (IT); BOMPANI, Luca, I-41043 Formigine MODENA (IT); SFORZA, Gerardo, I-41043 Formigine MODENA (IT); GIRLANDO, Simone, I-41043 Formigine MODENA (IT); CLEMENTI, Evaristo, I-41043 Formigine MODENA (IT); PIAZZA, Pier Angelo Tiburzio, I-41043 Formigine MODENA (IT)
(74) Representative: Mitola, Marco
(86) International application number: PCT/IB2016/051309
(87) International publication number: WO 2016/142861

(56) References cited:
- EP-A1- 2 765 054
- EP-A2- 2 384 950
- WO-A1-99/43531
- DE-A1- 3 711 662

## Description

### FIELD OF APPLICATION

This invention relates to a transport trolley, in particular for the transport of parts or components in industrial plants.

### STATE OF THE ART

Trolleys of this type are used both individually and connected to each other, in series, and are pushed or pulled manually or by means of towing vehicles to transport parts or of components of various types in industrial plants. For example, the industrial plant comprises different stations in an assembly line, in correspondence of which it is necessary to pick or unload said components. Such transport trolleys are thus used in the plant so as to be towed near said positions/stations and allow the loading/unloading of the related parts/components.

These trolleys are subjected to rather harsh operating conditions: in fact, each trolley must provide a carrying capacity of several tons; in addition, the operating environments, both indoor and outdoor, are often rather harsh, whether due to uneven floors or general cleanliness. Then the respective frames and wheels are subject to continuous vibrations and shocks.

Moreover, several trolleys are often transported in series by a single tractor: in this way, especially the first trolleys on the side of the tractor are subject to greater stresses. Furthermore, the trolleys must be steered and, in general, must be able to be moved in conditions of maximum manoeuvrability.

In particular, the train of trolleys, i.e., the row of trolleys arranged in series and pulled by a tractor, needs to follow a movement path as precise as possible and similar to that of the tractor itself.

This movement is characterised by a privileged direction of longitudinal advancement, especially in the case of mechanised towing, and by a significant need for manoeuvrability together with a need of movement also transverse, perpendicular to said privileged direction of longitudinal advancement, especially in the case of manual towing/pushing by an operator using a tiller or equivalent steering mechanism.

Also the movement/manoeuvrability of the trolleys, whether manual or with tractors, must be effortless so as to allow the movement of the trolleys even in relatively tight spaces and also allow an easy and effortless approach by an operator to the loading surface of the trolleys. Examples of known trolleys are disclosed by EP 2765054 A1, EP 2384950 A2, DE3711662 A1, with EP 2765054 A1 showing a trolley according to the preamble of claim 1.

### PRESENTATION OF THE INVENTION

One purpose of this invention is to provide a trolley that allows be moved/oriented in two privileged directions of which one main, longitudinal, for mechanised towing, and a second, especially for manual movement, arranged at 90° with respect to the first, i.e., in the transverse direction, minimising rotation stresses and thus allowing, through the manual rotation of the tiller, the alignment of at least two wheels in the direction of movement perpendicular to the main one, without making alignment manoeuvres of the trolley, which produce high stresses and require large spaces.

This need is met by a transport trolley according to claim 1.

### DESCRIPTION OF THE DRAWINGS

Further characteristics and advantages of this invention will be more understandable from the following description of its preferred and non-limiting examples of embodiments, in which:

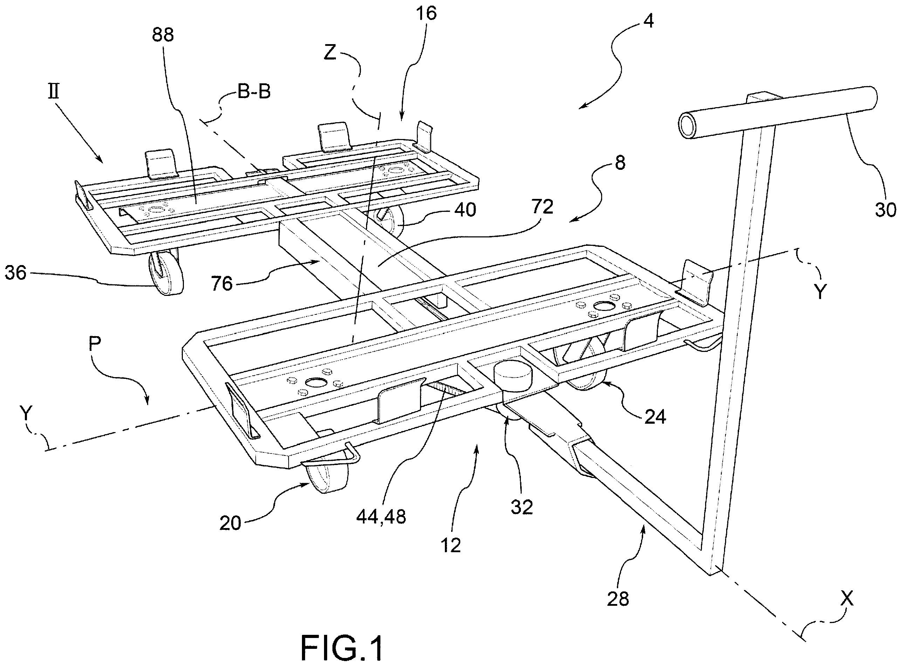

Figure 1 is a perspective view of a transport trolley according to this invention, in use configuration;

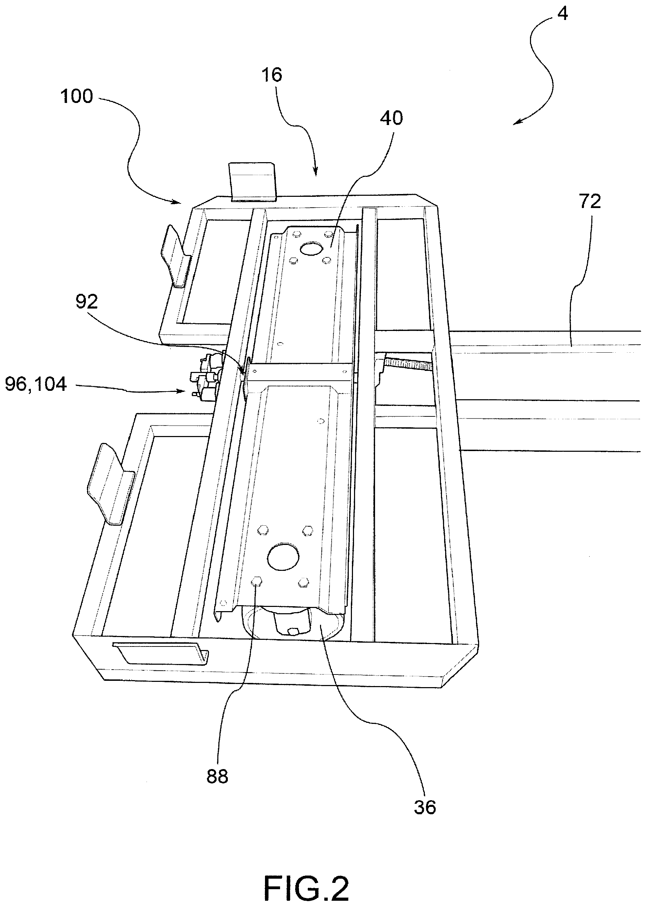

Figure 2 is a perspective view of the detail II of Figure 1, from a different angle with respect to Figure 1;

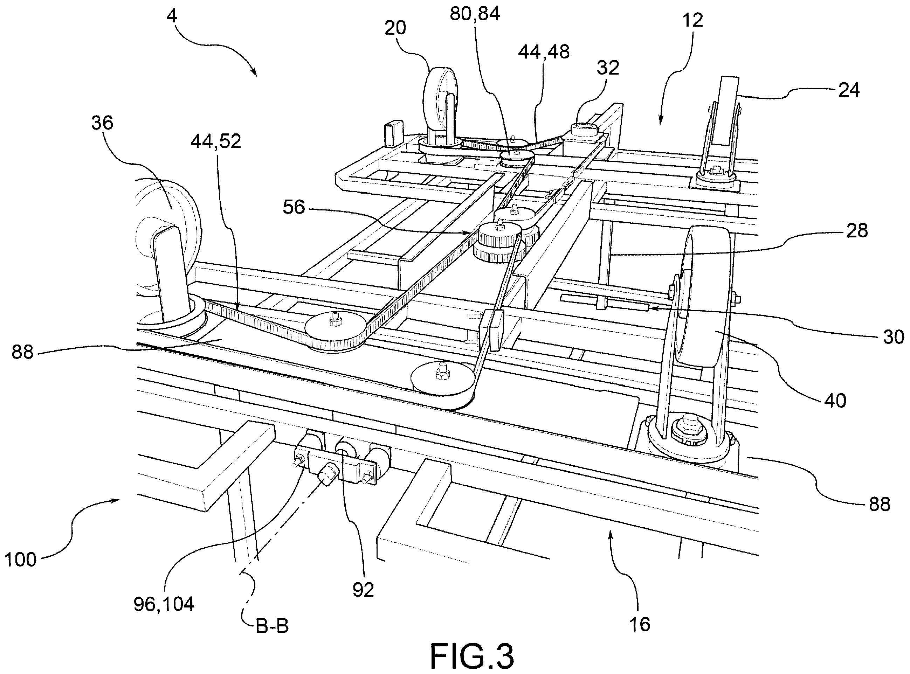

Figure 3 is a perspective view of the trolley of Figure 1; in upside-down configuration;

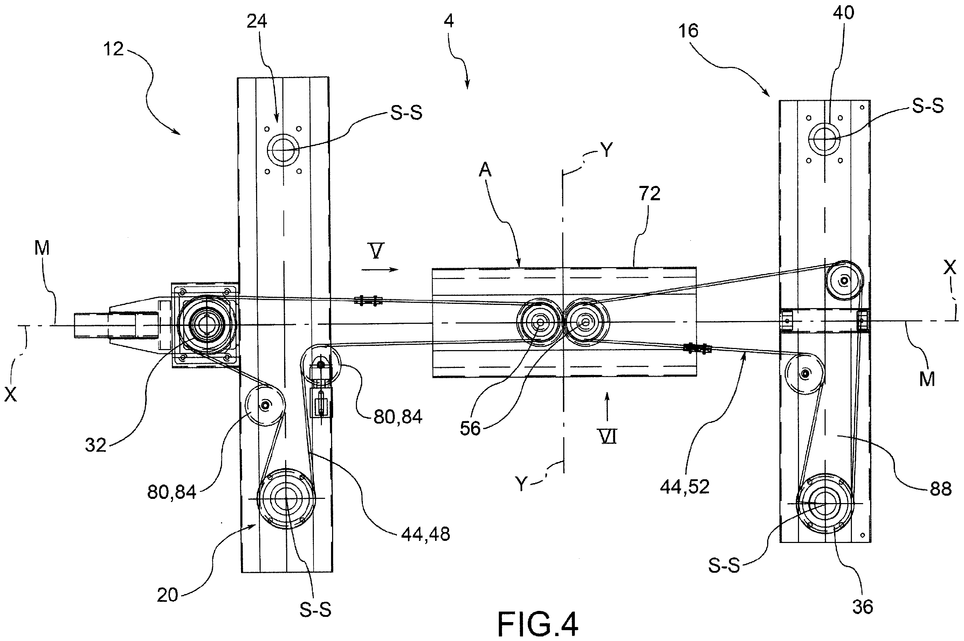

Figure 4 is a plan view from above of several components of the trolley of Figure 1, according to a different orientation with respect to Figure 1;

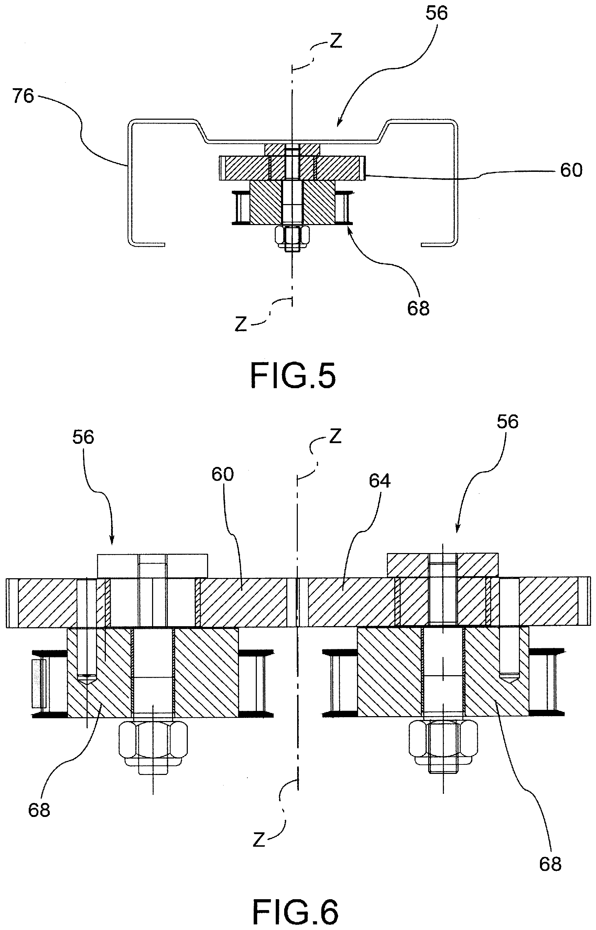

Figure 5 is a sectional view of the detail A of Figure 4, from the side of the arrow V of Figure 4;
Figure 6 is a sectional view of the detail A of Figure 4, from the side of the arrow VI of Figure 4.

The elements, or parts of elements, in common between the embodiments described below will be indicated with the same reference numbers.

### DETAILED DESCRIPTION

With reference to the above figures, reference number 4 globally indicates an overall schematic view of a transport trolley according to this invention.

The transport trolley 4 comprises a frame 8 that extends from a front portion or forecarriage 12 to a rear portion or rear axle 16, along a prevailing longitudinal direction X-X.

For the purposes of this invention, the dimensions, materials and shapes of the frame 8 of the trolley 4 are not relevant.

The front portion 12 is provided with a pair of front wheels, of which one front steering wheel 20 about a steering axis S-S parallel to a vertical direction Z-Z, perpendicular to a ground support P of the transport trolley 4, and a front idle wheel 24, pivoting about an axis parallel to said vertical direction Z-Z.

It should be clarified that both the front steering wheel 20 and front idle wheel 24 are steerable about respective steering axes parallel to each other; the difference is that the front steering wheel 20 is not free but is driven in rotation around its steering axis S-S, as better described below, while the front idle wheel 24 is precisely idle, i.e., free to rotate around its steering axis without any restriction or limitation. The front portion 12 is also provided with a tiller or steering means 28 that serves to achieve the commanded steering of at least said front steering wheel 20.

The tiller 28 can be used manually by an operator: for this purpose, it is provided with suitable grip or handlebar 30. The tiller 28 is rotatably mounted on the forecarriage 12 for example by means of a group 32 that comprises for example a set of pulley bearings suitable to ensure that the movement of the tiller is transmitted to the steering wheels; said group allows the tiller 28 to rotate about an axis substantially parallel to the vertical direction Z-Z.

In known manner (not illustrated) the tiller 28 may comprise components that also allow mechanical coupling to obtain mechanised towing and precisely the creation of a train of trolleys connected to each other that, in this way, can connect the steering of first trolley to the respective steering of the successive ones, through the group 32.

The rear portion or rear axle 16 is provided with a pair of rear wheels, including a rear steering wheel 36 about a steering axis S-S parallel to the vertical direction Z-Z, and a rear idle wheel 40, pivoting with respect to an axis parallel to said vertical direction Z-Z.

Also in the case of the rear wheels, it should be clarified that both the rear steering wheel 36 and rear idle wheel 40 are steerable about respective steering axes parallel to each other; the difference is that the rear steering wheel 36 is not free but is driven in rotation around its steering axis S-S, as better described below, while the rear idle wheel 40 is precisely idle, i.e., free to rotate around its steering axis without any restriction or limitation.

The front and rear steering wheels 20,36, are arranged on the same side of the trolley 4 with respect to a centre plane M-M of the frame 8 parallel to the prevailing longitudinal direction X-X.

For example, with respect to said centre plane M-M, the two front and rear steering wheels 20,36 are arranged on the right side of the frame 8, with respect to a direction of advancement of the trolley, in use configuration, on the side of the tiller 28, and the front and rear idle wheels 24,40 are arranged on the left side of the frame 8.

According to an embodiment, the front steering and idle wheels 20,24 and the rear steering and idle wheels 36,40 have the same wheel track, i.e., the same distance or interaxis along a transverse direction Y-Y, perpendicular to the longitudinal direction X-X and the vertical direction Z-Z. Preferably, the front steering and idle wheels 20,24 and the rear steering and idle wheels 36,40 have different wheel tracks, in particular the wheel track of the front steering and idle wheels 20,24 is less than the wheel track of the rear steering and idle wheels 36,40. In this way, the trolley is ensured greater stability, especially during cornering.

Said front steering and idle wheels 20, 24 and the rear steering and idle wheels 36,40 are then arranged symmetrically with respect to the centre plane M-M.

Advantageously, the transport trolley 4 comprises transmission means 44 that kinematically connect the tiller 28 with said front and rear steering wheels 20,36.

According to an embodiment, the transmission means 44 comprise a front belt or chain 48 kinematically connected with the tiller 28 and with the front steering wheel 20, and a rear belt or chain 52 kinematically connected with the rear steering wheel 36.

So, the tiller 28 comprises a shaft with a handlebar 30, pivotally connected to the forecarriage 12 so as to transmit the rotary motion to said front belt or chain 48 and, through the transmission means 44, to said rear belt or chain 52.

The expression belt or chain means all types of such belts, for example smooth, toothed, with special or standard profiles, made of polymeric materials and non, simple or reinforced, as well as all types of chains, with any type of material and link.

Advantageously, said front and rear belts or chains 48,52 are mechanically separated from each other and kinematically connected through the interposition of inversion of motion means 56, so as to command said front and rear steering wheels 20,36, to rotate in directions opposite to each other.

This opposite rotation of the two front and rear steering wheels 20,36, arranged on the same side of the trolley, it allows to realising movement paths that are very faithful to those of the front tractor, improving the steering kinematics of the train with respect to the tractor.

It should be clarified that the two front and rear belts or chains 48,52 are separated from each other, i.e., are two closed and independent systems, kinematically connected to each other by the inversion of motion means 56.

The front belt or chain 48 is mainly housed in said forecarriage 12, while the rear chain or belt 52 is mainly housed in said rear axle 16.

The inversion of motion means 56 comprise a pair of gears meshing with each other, wherein a first gear 60 is operatively connected to the front belt or chain 48 and a second gear 64 is operatively connected to the rear belt or chain 52.

Each gear 60,64 is integral in rotation with a pulley or chain sprocket 68, said pulley or chain sprocket 68 being coupled to a corresponding front and rear belt or chain 48,52. The meshing between the gears 60,64 allows for the inversion of motion between the front and rear belts or chains 48,52 and thus the inverted rotation of the front and rear steering wheels 20,36 connected to them.

The transmission ratio created between the inversion of motion means 56 is preferably equal to 1:1. In this way the absolute angle of rotation imparted to the front and rear steering wheels 20,36 is always the same.

For example, the inversion of motion means 56 are fastened to a fixed intermediate portion 72 of the frame 8 comprised between the forecarriage 12 and the rear axle 16.

For example, the fixed intermediate portion 72 of the frame 8 comprises protection bulkheads 76 of the inversion of motion means 56 and/or of the front and rear belts or chains 48,52.

According to an embodiment, the forecarriage 12 comprises means for adjusting the tension 80 of the front belt or chain 48 fastened to the forecarriage itself.

For example, said means for adjusting the tension 80 of the belt or chain 48 fastened to the forecarriage 12 comprise a pulley or adjustment chain sprocket 84 that interfaces with said front belt or chain 48, and devices for modifying and adjusting the position of said pulley or adjustment chain sprocket 84 with respect to the forecarriage 12. For example it is possible to provide slotted holes useful for changing the position of the pulley or chain sprocket 84 and therefore the pull with which the belt or chain interfaces with said pulley or adjustment chain sprocket 84.

Preferably, said tensioning means 80 of the front belt or chain 48 comprise automatic play recovery systems, for example by means of springs or equivalent systems, which allow automatically recovering any losses of tension, even minimum, during use. So, this recovery is not only static but also dynamic, i.e., the means for adjusting the tension 80 during the use of the trolley, automatically and without operator intervention, recover any play that may occur in order to always have a correctly tensioned front belt or chain.

It is clear that the number, position and type of pulley or adjustment chain sprocket, as tension adjustment means, is only indicative and not limiting and may be changed as needed.

The rear axle 16 comprises a rocker 88 pivoting around a pivoting axis B-B passing through the centre plane M-M of the frame 8 parallel to the prevailing longitudinal direction X-X, said pivoting rocker 88 supporting the rear steering wheel 36 and the rear idle wheel 40.

The pivoting rocker 88 is hinged to the rear axle 16 preferably about at least one pivoting pin 92 passing through the centre plane M-M of the frame parallel to the prevailing longitudinal direction X-X.

This system allows improving the guidability of the trolley during mechanised towing ensuring the best condition for supporting the wheels on the ground during movement. For this purpose, a solution is considered preferable in which the rear axle has a distance between the wheels 36 and 40 from the longitudinal axis X-X and thus a rear wheel track slightly greater than the distance from the same axis of the front wheels 20-24, i.e., the front wheel track, in this way ensuring the trolley greater stability, especially during cornering.

Preferably, the rear axle 16 comprises end-of-travel stops (not represented) for the pivoting movement of the pivoting rocker 88. In other words the end-of-travel stops limit the rotation of the pivoting rocker 88 with respect to the frame 8.

Preferably, the rear axle 16 comprises tensioning means 96 of the rear belt or chain 52 that regulate the tension of said belt or chain by changing the position of the pivoting rocker 88 with respect to the rear axle 16, so as to vary the longitudinal position of the pivoting rocker 88, parallel to said prevailing longitudinal direction X-X.

For example, said tensioning means 96 of the rear belt or chain 52 comprise automatic play recovery systems, for example by means of springs or equivalent systems, that allow automatically recovering any losses of tension, even minimum, during use. So, this recovery is not only static but also dynamic, i.e., the means for adjusting the tension 96 of the rear belt or chain 52 during the use of the trolley, automatically and without operator intervention, recover any play that may occur in order to always have a correctly tensioned rear belt or chain 52.

Preferably, said tensioning means 96 are arranged on the opposite side to the rear belt or chain 52, i.e., towards a rear end 100 of the rear axle 16 so to be easily accessible by an operator to perform any adjustments. For example, said tensioning means 96 comprise at least one adjustment device 104, the function of which is to modify the longitudinal position of the pivoting rocker 88 with respect to the rear axle 16. In this way, the position of the pivoting rocker 88 is varied and with it the position of the rear steering wheel 36 and thus the pull of the corresponding rear belt or chain 52. According to an embodiment, the pivoting rocker 88 is integral with the pivoting pin 92 that defines the pivoting axis B-B of the rocker itself, allowing adjustment by means of the body 104. This pivoting pin 92 is received and pivotally supported by the rear axle 16. It is also possible to provide that the pivoting pin 92 is fixed to the rear axle 16 and is pivotally housed in a seat formed on the pivoting rocker 88.

The pivoting rocker 88 can also support additional returns or pulleys acting on the rear belt or chain 52 that contribute to tension and guiding the pull of the latter.

Note that the longitudinal movement of the pivoting rocker 88 allows uniformly and symmetrically stressing the rear belt or chain 52: in this way it ensures a longer life of the rear belt or chain 52 as well as of all the related supports and bearings of the organs that interface with it.

Now the method of assembly and thus the adjustment of a transport trolley according to this invention will be described.

Preferably, the trolley according to the invention provides for the positioning and association of the various organs of rotation, inversion (such as, for example, pulleys, inverters, sprockets, etc.), in a simple way according to a pre-assembly technique to be implemented during construction of the trolley.

In particular, the various components are positioned with great precision, such as to ensure the correct travel of the tension recovery systems. For this purpose, pre-drilled modules are provided, in which the mounting positions of such organs of rotation, are certain; in this way, assembly errors or misalignments are avoided that could affect the correct assembly and subsequent operation of the trolley, effectively allowing reducing maintenance of the devices/trolley to a minimum. These modules are made in such a way as to provide the flexibility necessary for the production of trolleys of various types/dimensions and therefore such modules are unique for the realisation of different sizes of trolley and simply subject to modifications of the structure of the trolley associated to different transmission belt lengths.

As can be appreciated from the description, the transport trolley according to the invention allows overcoming the drawbacks presented in the prior art.

In particular, with this invention a trolley structure was realised suitably dimensioned with wheels and supports without offset, provided with wheels prepared to be actuated simultaneously by means of the rotation of the tiller, opposite to idle wheels, i.e., free to rotate, whose high offset allows minimising the stress of rotation, especially in the case of
manual towing by an operator.

Furthermore, a trolley has been realised that reduces all maintenance in addition to the adjustments and/or calibrations typical of the trolleys currently known in the art.

In particular, the rotation mechanism of the trolley does not need lubrication: this characteristic is particularly advantageous in the case of use of the trolley outdoors since the weather could create oxidation and/or degradation effects.

Moreover, the cart according to this invention reduces the need for frequent tensioning of the transmission caused by motion, as is the case in solutions of the known art.

Furthermore, the transmission of rotation from the tiller to the wheels, implemented through the motion (kinematics) of the belts avoids the use of differentiated planes of rotation, as happens for example in the case of known solutions that employ a single chain having branches, incoming and outgoing, that cross each other to achieve the inversion of the motion and therefore the rotation in counter-phase of the driven wheels.

Well, such known single belt or chain solutions have misalignments between the branches of the belt or chain to prevent rubbing between them in correspondence of this intersection: the presence of these misalignments significantly stresses the means of transmission of motion and facilitates a premature wear or breakage; furthermore, in actual working conditions, for example in correspondence of bumps and dips or rises of the ground, it is not uncommon for the branches to touch and wear in correspondence of such intersection, accelerating the wear of the chain or belt.

This invention allows definitively solving these problems since there are no intersections of any kind between the belts or chains and therefore there is no risk of rubbing between the branches. Moreover, the lack of intersections allows avoiding any misalignment of the belts or chains, which can work on parallel planes without being subjected to additional mechanical stresses. In other words, the belts or chains work in optimal mechanical conditions, minimising the effects of torsion, yielding and/or wear during the normal cycle of use, since they do not rub against each other.

For this purpose, the rotation transmission system has been divided into two parts, namely a front part and a rear part, through use of two belts connected to the centre by a mechanical rotation inversion system, with the use where possible of material not to subject to wear/degradation due to environmental conditions of normal use such as degradation by oxidation due to outdoor use.

In this way, it was possible to distribute/subdivide the overall tensions generated by the transmission, on shorter sections of belt/chain, and therefore also make the belts/chains that ensure the guidance of the steering (drive) wheels less subject to loss of tension during the use of the trolley.

Furthermore, in order to reduce the existing maintenance, the trolley according to the invention has been equipped with two independent automatic tensioning systems (or tension recovery systems). The first on the front part of the trolley, the second positioned in the rear part of the trolley and horizontally centred on the rear oscillating/pivoting system, i.e., along a longitudinal centre plane of the trolley. Both systems are able to automatically recover play of several/various mm of stroke and therefore are able to compensate for the losses of tension due to use and/or light wear phenomena.

In the rear of the trolley, in addition to the recovery of play, the oscillating portion introduces a further recovery of vertical misalignments of a few millimetres of planarity of the floor surfaces: in this way, the trolley is able to easily absorb any disconnections of the ground.

For this purpose, it is advantageous to use, as the transmission organ, toothed belts made of rubber or polyurethane, which have a significant degree of flexibility.

Moreover, such belts do not require lubrication (therefore they not require maintenance) and are not subject to degradation by the weather.

So the trolley can be easily used both indoors and outdoors.

A person skilled in the art, in order to satisfy contingent and specific needs, may make numerous modifications and variations to the trolleys described above, all however contained within the scope of the invention as defined by the following claims.

## Claims

1. Transport trolley (4) comprising
- a frame (8) that extends from a front portion (12) to a rear portion (16), along a prevailing longitudinal direction (X-X),
- the front portion (12) being provided with a pair of front wheels, including a front steering wheel (20) about a steering axis (S-S) parallel to a vertical direction (Z-Z), perpendicular to a ground support (P) of the trolley (4), and a front idle wheel (24), pivoting about an axis parallel to said vertical direction (Z-Z), and a tiller (28),
- the rear portion (16) being provided with a pair of rear wheels, including a rear steering wheel (36) about a steering axis parallel to the vertical direction (Z-Z), and a rear idle wheel (40), pivoting about an axis parallel to said vertical direction (Z-Z),
- wherein the front and rear steering wheels (20, 36), are arranged on the same side of the trolley (4) with respect to a centre plane (M-M) of the frame (8) parallel to the prevailing longitudinal direction (X-X),
- wherein the trolley (4) comprises transmission means (44) that kinematically connect the tiller (28) with said front and rear steering wheels (20, 36),
- the transmission means (44) comprise a front belt or chain (48) kinematically connected with the tiller (28) and with the front steering wheel (20), and a rear belt or chain (52) kinematically connected with the rear steering wheel (36),
- wherein said front and rear belts or chains (48, 52) are mechanically separated from each other and kinematically connected through the interposition of inversion of motion means (56), so as to command said front and rear steering wheels (20, 36), to rotate in directions opposite to each other,
**characterised in that** the rear portion (16) comprises a rocker (88) pivoting around a pivoting pin (92) that defines a pivoting axis (B-B) passing through the centre plane (M-M) of the frame (8) parallel to the prevailing longitudinal direction (X-X), said pivoting rocker (88) supporting the rear steering wheel (36) and the rear idle wheel (40).

2. Transport trolley (4) according to claim 1, wherein said inversion of motion means (56) comprise a pair of gears (60, 64) meshing with each other, wherein a first gear (60) is operatively connected to the front belt or chain (48) and a second gear (64) is operatively connected to the rear belt or chain (52).

3. Transport trolley (4) according to claim 2, wherein each gear (60, 64) is integral in rotation with a pulley or chain sprocket (68), said pulley or chain sprocket (68) being coupled to a corresponding front and rear belt or chain (48, 52).

4. Transport trolley (4) according to any of the preceding claims, wherein said inversion of motion means (56) are fastened to a fixed intermediate portion (72) of the frame (8) between the front portion (12) and the rear portion (16).

5. Transport trolley (4) according to claim 4, wherein the intermediate portion (72) of the frame (8) comprises protection bulkheads (76) of the inversion of motion means (56) and/or of the front and rear belts or chains (48, 52).

6. Transport trolley (4) according to any of the preceding claims, wherein the front portion (12) comprises means for adjusting the tension (80) of the belt or chain (48, 52) fastened to the front portion itself.

7. Transport trolley (4) according to claim 6, wherein said means for adjusting the tension (80) of the belt or chain (48, 52) fastened to the front portion (12) comprise a pulley or adjustment chain sprocket (84) that interfaces with said front belt or chain (48), and devices for modifying and adjusting the position of said pulley or adjustment chain sprocket (84) with respect to the front portion (12), said devices comprising automatic play recovery systems, by means of springs or equivalent systems, that all the automatic recovery of any loss of tension of the front belt or chain (48) during use.

8. Transport trolley (4) according any one of the preceding claims, wherein the rear portion (16) comprises tensioning means (96) of the rear belt or chain (52) that regulate the tension of said rear belt or chain (52) by changing the position of the pivoting rocker (88) with respect to the rear portion (16), so as to vary the longitudinal position of the pivoting rocker (88), parallel to said prevailing longitudinal direction (X-X).

9. Transport trolley (4) according to claim 8, wherein said tensioning means (96) of the rear belt or chain (52) are arranged on the opposite side to the rear belt or chain (52), i.e., towards a rear end (100) of the rear portion (16) so to be easily accessible by an operator to perform any adjustments.

10. Transport trolley (4) according to claim 8 or 9, wherein said tensioning means comprise at least one adjustment device (104), whose function is to modify the longitudinal position of the pivoting rocker (88) with respect to the rear axle (16), so as to vary the position of the pivoting rocker (88) and with it the rear steering wheel (36) and therefore the pull of the corresponding rear belt or chain (52).

11. Transport trolley (4) according to claim 8, 9 or 10, wherein said tensioning means (96) of the rear belt or chain (52) comprise automatic play recovery systems, by means of springs or equivalent systems, that allow automatically recovering any losses of tension of the rear belt or chain (52) during use.

12. Transport trolley (4) according to any of the preceding claims, wherein the tiller (28) comprises a shaft with a handlebar (30), pivotally connected to the front portion (12) so as to transmit the rotary motion to said front belt or chain (48) and, through the transmission means (44), to said rear belt or chain (52).

13. Transport trolley (4) according to any of the preceding claims, wherein the front steering and idle wheels (20, 24) and the rear steering and idle wheels (36, 40) have different wheel tracks, i.e., distance or interaxis along a transverse direction (Y-Y), perpendicular to the longitudinal direction (X-X) and to the vertical direction (Z-Z), so that the wheel track of the front steering and idle wheels (20, 24) is less than the wheel track of the rear steering and idle wheels (36, 40) .

## Patentansprüche

1. Transportwagen (4), der umfasst:
- einen Rahmen (8), der sich entlang einer vorherrschenden Längsrichtung (X-X) von einem vorderen Abschnitt (12) zu einem hinteren Abschnitt (16) erstreckt,
- wobei der vordere Abschnitt (12) mit einem Paar Vorderräder, das ein vorderes Lenkrad (20) um eine Lenkachse (S-S) parallel zu einer Vertikalrichtung (Z-Z) senkrecht zu einem Bodenträger (P) des Wagens (4) und ein vorderes Leerlaufrad (24), das um eine Achse parallel zu der Vertikalrichtung (Z-Z) schwenkt, umfasst, und einer Deichsel (28) versehen ist,
- wobei der hintere Abschnitt (16) mit einem Paar Hinterräder, das ein hinteres Lenkrad (36) um eine Lenkachse parallel zu der Vertikalrichtung (Z-Z) und ein hinteres Leerlaufrad (40), das um eine Achse parallel zu der Vertikalrichtung (Z-Z) schwenkt, umfasst, versehen ist,
- wobei die vorderen und hinteren Lenkräder (20, 36) auf der gleichen Seite des Wagens (4) in Bezug auf eine Mittelebene (M-M) des Rahmens (8) parallel zu der vorherrschenden Längsrichtung (X-X) angeordnet sind,
- wobei der Wagen (4) Getriebemittel (44) umfasst, die die Deichsel (28) kinematisch mit den vorderen und hinteren Lenkrädern (20, 36) verbinden,
- wobei die Getriebemittel (44) einen vorderen Riemen oder eine Kette (48), der/die kinematisch mit der Deichsel (28) und mit dem vorderen Lenkrad (20) verbunden ist, und einen hinteren Riemen oder eine Kette (52), der/die kinematisch mit dem hinteren Lenkrad (36) verbunden ist, umfassen,
- wobei die vorderen und hinteren Riemen oder Ketten (48, 52) mechanisch voneinander getrennt sind und durch Einfügen von Bewegungsumkehrmitteln (56) kinematisch verbunden sind, um den vorderen und hinteren Lenkrädern (20, 36) zu befehlen, sich in zueinander entgegengesetzte Richtungen zu drehen,
**dadurch gekennzeichnet, dass**
der hintere Abschnitt (16) einen Kipphebel (88) umfasst, der um einen Schwenkstift (92) schwenkt, der eine Schwenkachse (B-B) definiert, die durch die Mittelebene (M-M) des Rahmens (8) parallel zu der vorherrschenden Längsrichtung (X-X) geht, wobei der schwenkende Kipphebel (88) das hintere Lenkrad (36) und das hintere Leerlaufrad (40) hält.

2. Transportwagen (4) nach Anspruch 1, wobei die Bewegungsumkehrmittel (56) ein Paar Zahnräder (60, 64), die miteinander eingreifen, umfassen, wobei ein erstes Zahnrad (60) mit dem vorderen Riemen oder der Kette (48) betriebsfähig verbunden ist und ein zweites Zahnrad (64) mit dem hinteren Riemen oder der Kette (52) betriebsfähig verbunden ist.

3. Transportwagen (4) nach Anspruch 2, wobei jedes Zahnrad (60, 64) sich integral mit einer Riemenscheibe oder einem Kettenrad (68) dreht, wobei die Riemenscheibe oder das Kettenrad (68) mit einem entsprechenden vorderen oder hinteren Riemen oder einer Kette (48, 52) gekoppelt ist.

4. Transportwagen (4) nach einem der vorhergehenden Ansprüche, wobei die Bewegungsumkehrmittel (56) an einem festen Zwischenabschnitt (72) des Rahmens (8) zwischen dem vorderen Abschnitt (12) und dem hinteren Abschnitt (16) befestigt sind.

5. Transportwagen (4) nach Anspruch 4, wobei der Zwischenabschnitt (72) des Rahmens Trennwände (76) der Bewegungsumkehrmittel (56) und/oder der vorderen und hinteren Riemen oder Ketten (48, 52) umfasst.

6. Transportwagen (4) nach einem der vorhergehenden Ansprüche, wobei der vordere Abschnitt (12) Mittel zum Einstellen der Spannung (80) des Riemens oder der Kette (48, 52) umfasst, die an dem vorderen Abschnitt selbst befestigt sind.

7. Transportwagen (4) nach Anspruch 6, wobei die Mittel zum Einstellen der Spannung (80) des Riemens oder der Kette (48, 52), die an dem vorderen Abschnitt (12) befestigt sind, eine Riemenscheibe oder ein Einstellkettenrad (48), das eine Schnittstelle zu dem vorderen Riemen oder der Kette (48) bildet, und Vorrichtungen zum Modifizieren und Einstellen der Position der Riemenscheibe oder des Einstellkettenrads (84) in Bezug auf den vorderen Abschnitt (12) umfassen, wobei die Vorrichtungen automatische Spielrückgewinnungssysteme mittels Federn oder äquivalenter Systeme umfassen, die während der Verwendung jegliche Verluste der Spannung des vorderen Riemens oder der Kette (48) automatisch wiedergutmachen.

8. Transportwagen (4) nach einem der vorhergehenden Ansprüche, wobei der hintere Abschnitt (16) Spannmittel (96) des hinteren Riemens oder der Kette (52) umfasst, die die Spannung des hinteren Riemens oder der Kette (52) durch Ändern der Position des schwenkenden Kipphebels (88) in Bezug auf den hinteren Abschnitt (16) regulieren, um die Längsposition des schwenkenden Kipphebels (88) parallel zu der vorherrschenden Längsrichtung (X-X) zu variieren.

9. Transportwagen (4) nach Anspruch 8, wobei die Spannmittel (96) des hinteren Riemens oder der Kette (52) auf der zu dem hinteren Riemen oder der Kette (52) entgegengesetzten Seite, d.h. in Richtung eines hinteren Endes (100) des hinteren Abschnitts (16) angeordnet sind, so dass sie für einen Bediener leicht zugänglich sind, um jegliche Einstellungen durchzuführen.

10. Transportwagen (4) nach Anspruch 8 oder 9, wobei die Spannmittel wenigstens eine Einstellvorrichtung (104) umfassen, deren Funktion es ist, die Längsposition des schwenkenden Kipphebels (88) in Bezug auf die Hinterachse (16) zu modifizieren, um die Position des schwenkenden Kipphebels (88) und mit ihr des hinteren Lenkrads (36) und daher den Zug des entsprechenden hinteren Riemens oder der Kette (52) zu variieren.

11. Transportwagen (4) nach Anspruch 8, 9 oder 10, wobei die Spannmittel (96) des hinteren Riemens oder der Kette (52) automatische Spielrückgewinnungssysteme mittels Federn oder äquivalenter Systeme umfassen, die während der Verwendung jegliche Verluste der Spannung des hinteren Riemens oder der Kette (52) automatisch wiedergutmachen.

12. Transportwagen (4) nach einem der vorhergehenden Ansprüche, wobei die Deichsel (28) eine Welle mit einer Lenkstange (30) umfasst, die schwenkbar mit dem vorderen Abschnitt (12) verbunden ist, um die Drehbewegung auf den vorderen Riemen oder die Kette (48) und durch das Getriebemittel (44) auf den hinteren Riemen oder die Kette (52) zu übertragen.

13. Transportwagen (4) nach einem der vorhergehenden Ansprüche, wobei die vorderen Lenk- und Leerlaufräder (20,24) und die hinteren Lenk- und Leerlaufräder (36, 40) verschiedene Spurweiten, d.h. Abstand oder Zwischenachsenabstand entlang einer Querrichtung (Y-Y) senkrecht zu der Längsrichtung (X-X) und zu der Vertikalrichtung (Z-Z) haben, so dass die Spurweite der vorderen Lenk- und Leerlaufräder (20,24) kleiner als die Spurweite der hinteren Lenk- und Leerlaufräder (36, 40) ist.

## Revendications

1. Chariot (4) de transport, comprenant
- un cadre (8) qui s'étend d'une partie avant (12) à une partie arrière (16) le long d'une direction longitudinale principale (X-X),
- la partie avant (12) étant munie d'une paire de roues avant, comprenant une roue directrice avant (20) autour d'un axe de direction (S-S) parallèle à une direction verticale (Z-Z), perpendiculaire à un support au sol (P) du chariot (4), et une roue folle avant (24), pivotant autour d'un axe parallèle à ladite direction verticale (Z-Z), et d'une barre de direction (28),
- la partie arrière (16) étant munie d'une paire de roues arrière, comprenant une roue directrice arrière (36) autour d'un axe de direction parallèle à la direction verticale (Z-Z), et une roue folle arrière (40), pivotant autour d'un axe parallèle à ladite direction verticale (Z-Z),
- dans lequel les roues directrices avant et arrière (20, 36) sont agencées du même côté du chariot (4) par rapport à un plan central (M-M) du cadre (8) parallèle à la direction longitudinale principale (X-X),
- dans lequel le chariot (4) comprend des moyens de transmission (44) qui relient cinématiquement la barre de direction (28) auxdites roues directrices avant et arrière (20, 36),
- les moyens de transmission (44) comprennent une courroie ou chaîne avant (48) reliée cinématiquement à la barre de direction (28) et à la roue directrice avant (20), et une courroie ou chaine arrière (52) reliée cinématiquement à la roue directrice arrière (36),
- dans lequel lesdites courroies ou chaînes avant et arrière (48, 52) sont mécaniquement séparées l'une de l'autre et cinématiquement reliées par l'intermédiaire de moyens d'inversion de mouvement (56), de sorte à commander lesdites roues directrices avant et arrière (20, 36) à tourner dans des directions opposées l'une à l'autre,
**caractérisé en ce que**
la partie arrière (16) comprend un basculeur (88) pivotant autour d'une broche de pivotement (92) qui définit un axe de pivotement (B-B) passant à travers le plan central (M-M) du cadre (8) parallèlement à la direction longitudinale principale (X-X), ledit basculeur pivotant (88) supportant la roue directrice arrière (36) et la roue folle arrière (40).

2. Chariot (4) de transport selon la revendication 1, dans lequel lesdits moyens d'inversion de mouvement (56) comprennent une paire de roues d'engrenage (60, 64) s'engrenant mutuellement, dans lequel une première roue d'engrenage (60) est fonctionnellement reliée à la courroie ou la chaîne avant (48) et une seconde roue d'engrenage (64) est fonctionnellement reliée à la courroie ou la chaîne arrière (52).

3. Chariot (4) de transport selon la revendication 2, dans lequel chaque roue d'engrenage (60, 64) est solidaire en rotation avec une poulie ou un pignon de chaîne (68), ladite poulie ou ledit pignon de chaîne (68) étant accouplé(e) à une courroie ou une chaîne avant et arrière correspondante (48, 52).

4. Chariot (4) de transport selon l'une quelconque des revendications précédentes, dans lequel lesdits moyens d'inversion de mouvement (56) sont fixés à une partie intermédiaire fixe (72) du cadre (8) entre la partie avant (12) et la partie arrière (16).

5. Chariot (4) de transport selon la revendication 4, dans lequel la partie intermédiaire (72) du cadre (8) comprend des cloisons de protection (76) des moyens d'inversion de mouvement (56) et/ou les courroies ou chaînes avant et arrière (48, 52).

6. Chariot (4) de transport selon l'une quelconque des revendications précédentes, dans lequel la partie avant (12) comprend des moyens pour ajuster la tension (80) de la courroie ou chaîne (48, 52) fixée à la partie avant elle-même.

7. Chariot (4) de transport selon la revendication 6, dans lequel lesdits moyens pour ajuster la tension (80) de la courroie ou chaîne (48, 52) fixée à la partie avant (12) comprennent une poulie ou un pignon de chaîne d'ajustement (84) qui s'interface avec ladite courroie ou chaîne avant (48), et des dispositifs pour modifier et ajuster la position de ladite poulie ou dudit pignon de chaîne d'ajustement (84) par rapport à la partie avant (12), lesdits dispositifs comprenant des systèmes de récupération automatique de jeu, au moyen de ressorts ou de systèmes équivalents, qui assurent tous la récupération automatique de toute perte de tension de la courroie ou chaîne avant (48) pendant l'utilisation.

8. Chariot (4) de transport selon l'une quelconque des revendications précédentes, dans lequel la partie arrière (16) comprend des moyens de tension (96) de la courroie ou de la chaîne arrière (52) qui régulent la tension de ladite courroie ou chaîne arrière (52) en modifiant la position du basculeur (88) pivotant par rapport à la partie arrière (16), de sorte à faire varier la position longitudinale du basculeur (88) pivotant, parallèlement à ladite direction longitudinale principale (X-X).

9. Chariot (4) de transport selon la revendication 8, dans lequel lesdits moyens de tension (96) de la courroie ou chaîne arrière (52) sont agencés sur le côté opposé à la courroie ou chaîne arrière (52), c'est-à-dire vers une extrémité arrière (100) de la partie arrière (16) de sorte à être facilement accessible par un opérateur pour effectuer des réglages.

10. Chariot (4) de transport selon la revendication 8 ou 9, dans lequel lesdits moyens de tension comprennent au moins un dispositif d'ajustement (104) dont la fonction est de modifier la position longitudinale du basculeur (88) pivotant par rapport à l'essieu arrière (16), de sorte à faire varier la position du basculeur (88) pivotant et avec elle la roue directrice arrière (36) et ainsi la tension de la courroie ou chaîne arrière (52) correspondante.

11. Chariot (4) de transport selon la revendication 8, 9 ou 10, dans lequel lesdits moyens de tension (96) de la courroie ou chaîne arrière (52) comprennent des systèmes de récupération automatique de jeu, au moyen de ressorts ou de systèmes équivalents, qui permettent de récupérer automatiquement toute perte de tension de la courroie ou chaîne arrière (52) pendant l'utilisation.

12. Chariot (4) de transport selon l'une quelconque des revendications précédentes, dans lequel la barre de direction (28) comprend un arbre avec un guidon (30), reliés de manière pivotante à la partie avant (12) de sorte à transmettre le mouvement de rotation à ladite courroie ou chaîne avant (48) et, par l'intermédiaire des moyens de transmission (44), à ladite courroie ou chaîne arrière (52).

13. Chariot de transport (4) selon l'une quelconque des revendications précédentes, dans lequel les roues directrice et folle avant (20, 24) et les roues directrice et folle arrière (36, 40) ont des empattements différents, c'est-à-dire, une distance ou un entraxe le long d'une direction transversale (Y-Y), perpendiculaire à la direction longitudinale (X-X) et à la direction verticale (Z-Z), de sorte que l'empattement des roues directrice et folle avant (20, 24) est inférieur à l'empattement des roues directrice et folle arrière (36, 40).
